# EUROPEAN PATENT SPECIFICATION

(11) **EP 2 048 334 B1**
(45) Date of publication and mention of the grant of the patent: **09.07.2014**
(21) Application number: 08165856.9
(22) Date of filing: 03.10.2008
(51) Int. Cl.: F01P 3/12, B60K 26/00

(54) **Vehicular cooling apparatus**
Kühlvorrichtung für Fahrzeug
Appareil de refroidissement pour véhicule

(30) Priority: 03.10.2007 JP 2007260192; 27.08.2008 JP 2008218259
(43) Date of publication of application: 15.04.2009
(73) Proprietor: TOYOTA JIDOSHA KABUSHIKI KAISHA, Toyota-shi, Aichi-ken, 471-8571 (JP); Fujitsu Ten Limited, Kobe-shi, Hyogo 652-8510 (JP); Toyota Boshoku Kabushiki Kaisha, Kariya-shi, Aichi-ken 448-8651 (JP); DENSO CORPORATION, Kariya-shi, Aichi-ken, 448-8661 (JP)
(72) Inventor: KANZAKA, Ryuji, Toyota-shi, Aichi-ken 471-8571 (JP); MATSUBARA, Yuji, Ikeda-shi, Osaka 563-8651 (JP); KIMURA, Shingo, Ikeda-shi, Osaka 563-8651 (JP); WAKABAYASHI, Hiroyuki, Kobe-shi, Hyogo 652-8510 (JP); TAKENAKA, Teruo, Kobe-shi, Hyogo 652-8510 (JP); MATSUYAMA, Yuuji, Kobe-shi, Hyogo 652-8510 (JP); KOHNO, Hiroaki, Kobe-shi, Hyogo 652-8510 (JP); ENOMOTO, Akira, Kariya-shi, Aichi-ken 448-8651 (JP); TANAKA, Kazuya, Kariya-shi, Aichi-ken 448-8651 (JP); SASANO, Norihisa, Kariya-shi, Aichi-ken 448-8661 (JP)
(74) Representative: Intès, Didier Gérard André

(56) References cited:
- EP-A- 0 995 895
- FR-A- 2 833 563
- FR-A- 2 892 693
- US-A1- 2001 045 761

## Description

### BACKGROUND OF THE INVENTION

### 1. Field of the Invention

The present invention relates to a cooling apparatus for use in an automotive vehicle, and particularly to a vehicular cooling apparatus suitable for cooling a heated vehicle accessory being an electronic control unit mounted on an automotive vehicle.

### 2. Description of the Related Art

In recent years, the automotive vehicle such as an automobile is provided with many kinds of electronic control unit (hereinafter simply referred to as "ECU") to assist the cruising operation of the automotive vehicle. One of the ECUs is usually arranged in an engine compartment accommodating therein an engine such as an internal combustion engine and an electric motor, and has a high surface temperature portion heated by active elements forming part of the ECU as well as by the ambient air heated by the engine. For this reason, it is required for the ECU to efficiently be heat radiated outside to prevent the processing capability of the ECU from being lowered when the temperature in the engine compartment is raised in response to the operation of the engine. To meet the above requirement of the ECU, there have so far been proposed a wide variety of vehicular cooling apparatuses designed to cool the ECU having such a high surface temperature portion with a cool air flow.

As one of the conventional cooling apparatuses of this type, there is known an apparatus which comprises an ECU case accommodating an ECU therein and connected through an air duct with a fan shroud housing therein a cooling fan for cooling a radiator. The cooling fan is operated to introduce a cool air flow through the air duct into the ECU case to cool the ECU. The air duct has an opening opened rearwardly of the fan. This leads to the fact that the cool air flow heated at a high temperature by air passed through the radiator heated by hot liquid water is introduced into the ECU case. The cool air flow thus heated contributes to raising the temperature of the ECU to an even higher level (see Japanese Patent Application Laid-open Publication No. 2000-257429).

Also known in the art is an apparatus which comprises a main fan for cooling a radiator, and a sub-fan provided independently from the main fan to introduce a cool air flow into an intake duct accommodating therein an ECU so that the ECU is cooled by the cool air flow introduced into the intake duct. The intake duct also has an opening opened rearwardly of the main fan. By the same reason, the opening of the intake duct positioned rearwardly of the main fan leads to introducing therethrough the cool air heated by the air flow passed through the main fan, thereby making it impossible to lower the temperature of the ECU to a desired level (see Japanese Patent Application Laid-open Publication No. 2000-192816).

The other known apparatus comprises an intake manifold partly forming an ECU case to efficiently use a narrow space around the intake manifold and to simplify the whole construction of the apparatus as well as to shorten the total length of wires to be used to have an ECU connected with other means controlled by the ECU. The ECU case is positioned rearwardly of the radiator so that the ECU is easily subjected to the temperature influence of the heated air flow passed through the radiator (see Japanese Patent Application Laid-open Publication No. 2004-239211).

All of these conventional cooling apparatuses, however, encounter such a problem that the ECU itself and the ECU supporting members located in the rear side of the radiator lead to the fact that the ECU and the ECU supporting members are susceptible to the heat influence of a large amount of air passed through the radiator and thus heated at a high temperature, thereby making it impossible to sufficiently radiate outside the heat of the ECU and efficiently cool the ECU.

In addition, the conventional cooling apparatuses are each constructed to have an ECU case for accommodating therein and cooling the ECU and to be provided with many members exclusively used for supporting and cooling the ECU in the engine compartment so that the cooling apparatus thus produced becomes complex in construction and costly. Moreover, the cooling apparatus not only needs an exclusive layout in the engine compartment but also becomes extremely difficult to perform an adequate maintenance especially in case of the engine compartment being narrow.

Other cooling apparatus are known from US 2001/045 761, FR 2 833 563, FR 2 892 693 and EP 0 995 895.

### SUMMARY OF THE INVENTION

It is, therefore, an object of the present invention to provide a vehicle according to claim 1, having a vehicular cooling apparatus which is excellent both in the cooling efficiency for the vehicle accessory, being an electronic control unit, and in maintenance workability with a high degree of freedom for the layout of the vehicular cooling apparatus.
It is another object of the present invention to provide a vehicular cooling apparatus which can be efficiently and sufficiently cooled by a cool air flow from the front side of the vehicle while avoiding the heat influence from the engine.
It is a further object of the present invention to provide a vehicular cooling apparatus which is simple in construction and thus can be produced at a low cost by making it unnecessary to accommodate the vehicle accessory in the air-cooling case so far needed for the conventional vehicular cooling apparatus.

The present invention is defined by claim 1.

According to the first aspect of the present disclosure, there is provided a vehicular cooling apparatus for cooling an engine to be mounted on a vehicle, comprising: a heat radiation device to be mounted on the vehicle forwardly of the engine and having at least one liquid pipe allowing a cooling liquid to be circulated therethrough to the engine and arranged to form a radiator body through which an air flow from the front side of the vehicle passes to radiate heat from the cooling liquid through the liquid pipe, and a vehicle accessory to be mounted on the vehicle, characterized in that the vehicle accessory is arranged at a position closer to the heat radiation device than the engine to be cooled by the air flow from the front side of the vehicle.
The above construction of the vehicular cooling apparatus leads to the fact that the cool air flow can efficiently cool the vehicle accessory by being introduced around the vehicle accessory arranged at a position closer to the heat radiation device than the engine, and that it is neither required to accommodate the vehicle accessory in the air-cooling case nor required to provide pipes or ducts exclusively used for the vehicle accessory. As a consequence, the vehicular cooling apparatus according to the present disclosure is excellent both in the cooling efficiency of the vehicle accessory and in the maintenance workability of the vehicle accessory.

According to the second aspect of the present disclosure, there is provided a vehicular cooling apparatus for cooling an engine to be mounted on a vehicle, comprising: a heat radiation device to be mounted on the vehicle forwardly of the engine and having at least one liquid pipe allowing a cooling liquid to be circulated therethrough to the engine and arranged to form a radiator body through which an air flow from the front side of the vehicle passes to radiate heat from the cooling liquid through the liquid pipe, and a vehicle accessory to be mounted on the vehicle, characterized in that the vehicle accessory has a front end portion and is arranged with respect to the heat radiation device with the front end portion positioned forwardly of the radiator body to be cooled by the air flow from the front side of the vehicle.
In the vehicular cooling apparatus according to the present disclosure, the cool air flow is introduced into the space around the vehicle accessory positioned with respect to the heat radiation device with the front end portion positioned forwardly of the radiator body, thereby making it possible to efficiently cool the vehicle accessory with the cool air flow introduced from the front side of the vehicle. Further, it is neither required to accommodate the vehicle accessory in the air-cooling case nor required to provide pipes or ducts exclusively used for the vehicle accessory. As a consequence, the vehicular cooling apparatus above mentioned is excellent both in the cooling efficiency of the vehicle accessory and in the maintenance workability of the vehicle accessory.

According to the third aspect of the present disclosure, the vehicle accessory may preferably have a front end face positioned forwardly of the front end face of the radiator body of the heat radiation device. This makes it possible to sufficiently and efficiently cool the vehicle accessory with the cool air flow introduced from the front side of the vehicle.

According to the fourth aspect of the present disclosure, the vehicle accessory may preferably have a high surface temperature portion and a low surface temperature portion, the high surface temperature portion being positioned forwardly of the low surface temperature portion. By the above construction of the vehicle accessory, the cool air flow is brought into contact with the high surface temperature portion ahead of the low surface temperature portion, thereby enhancing the cooling effect of the vehicle accessory.

According to the fifth aspect of the present disclosure, the vehicle accessory may preferably be constituted by an electronic control unit to be mounted on the vehicle. The above construction of the vehicle accessory makes it possible to enhance the reliability of the electronic control unit without deteriorating the performance of the electronic control unit.

According to the sixth aspect of the present disclosure, the vehicle accessory may preferably be arranged in the vicinity of the outer peripheral portion of the radiator body of the heat radiation device, and the vehicular cooling apparatus may preferably comprise an air cleaner disposed in the neighborhood of the heat radiation device to introduce air around the vehicle accessory thereinto and to separate the air flow passing around the vehicle accessory from the air flow passed through the heat radiation device.
The above construction of the vehicular cooling apparatus contributes to the fact that the air cleaner can separate the air flow passing around the vehicle accessory from the air flow passed through the radiator and thus raised to a high temperature. This means that the air flow passing around the vehicle accessory is maintained in a cool state, and that the amount of cool air flow sufficient to cool the vehicle accessory is secured.

According to the seventh aspect of the present disclosure, the vehicle accessory may preferably be positioned forwardly of the air cleaner. The vehicle accessory thus positioned is brought into contact with a sufficient amount of cool air to be introduced into the air cleaner, thereby making it possible to enhance the cooling effect.

According to the eighth aspect of the present disclosure, the air cleaner may preferably have an air inlet duct having an air inlet opening positioned in the vicinity of the rear end portion of the vehicle accessory. The air cleaner thus constructed can allow the air flow to be directed in the fore and aft direction of the vehicle, securing an increased amount of air flow to be introduced into the space around the vehicle accessory and to enhance the cooling efficiency.

According to the ninth aspect of the present disclosure, the air cleaner may preferably have an air inlet duct having an air inlet opening opened in the direction opposite to the heat radiation device. The air cleaner thus constructed can produce an air flow directed toward the surface of the vehicle accessory, thereby bringing about the high cooling efficiency.

According to the tenth aspect of the present disclosure, the vehicle accessory may preferably be constituted by an electronic control unit to be mounted on the vehicle, and the air cleaner may preferably have an air cleaner case for supporting the electronic control unit. The above construction of the vehicle accessory results in efficiently cooling the electronic control unit, thereby making it possible to enhance the reliability of the electronic control unit without deteriorating the performance of the electronic control unit.

According to the eleventh aspect of the present disclosure, the vehicular cooling apparatus may further comprise a fan provided in the vicinity of the heat radiation device to produce the air flow passing through the heat radiation device, and a fan shroud covering the rear side of the heat radiation device around the fan, the air cleaner having an air cleaner case integrally formed with the fan shroud. The vehicular cooling apparatus thus constructed can not only reduce the number of parts and elements constituting the vehicular cooling apparatus but also extensively simplify structures for supporting the air cleaner, thereby making it possible to provide a compact vehicular cooling apparatus with a high degree of freedom for the layout of the vehicular cooling apparatus around the radiation device.

According to the twelfth aspect of the present disclosure, the air cleaner case of the air cleaner may preferably be disposed at the side of the fan to vertically extend. This construction enables to secure an ample space needed for arranging the engine within the narrow engine compartment.
According to the thirteenth aspect of the present disclosure, the air cleaner case of the air cleaner may preferably have a cap capable of being opened and closed in the fore and aft direction of the vehicle. This construction can facilitate the maintenance of the air cleaner and can secure a large working space needed for the maintenance of the vehicle accessory, thereby rendering it possible to enhance the maintenance workability.

### BRIEF DESCIPTION OF THE DRAWINGS

The objects, features and advantages of the present invention will become apparent as the description proceeds when taken in conjunction with the accompanying drawings, in which:
FIG. 1 is a plan view of essential portions forming part of the vehicular cooling apparatus according to one embodiment of the present invention;
FIG. 2 is a rear view of the essential portions forming part of the vehicular cooling apparatus according to one embodiment of the present invention;
FIG. 3 is a perspective view seen from the rear side of the essential portions forming part of the vehicular cooling apparatus according to one embodiment of the present invention; and
FIG. 4 is a side elevation view showing another fastening means for fastening a vehicle accessory to an air cleaning device together with an air cleaner, a radiator, and an inlet duct forming part of the vehicular cooling apparatus according to the present invention.

### DETAILED DESCRIPTION OF THE PREFERRED EMBODIMENT

One preferred embodiment of the vehicular cooling apparatus according to the present invention will be described in detail with reference to the accompanying drawings.

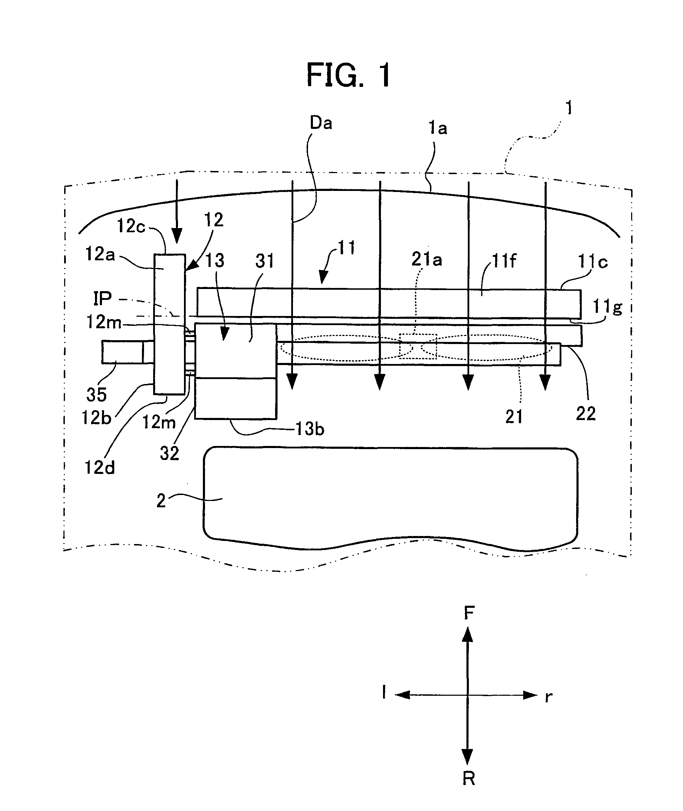

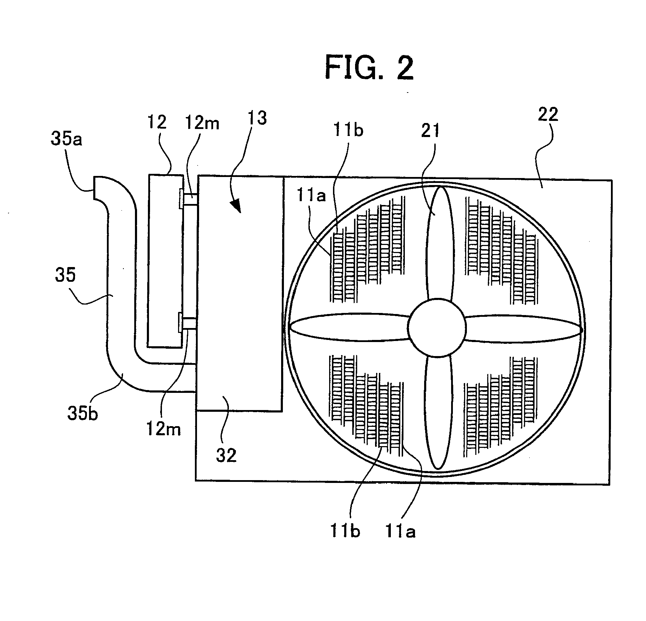

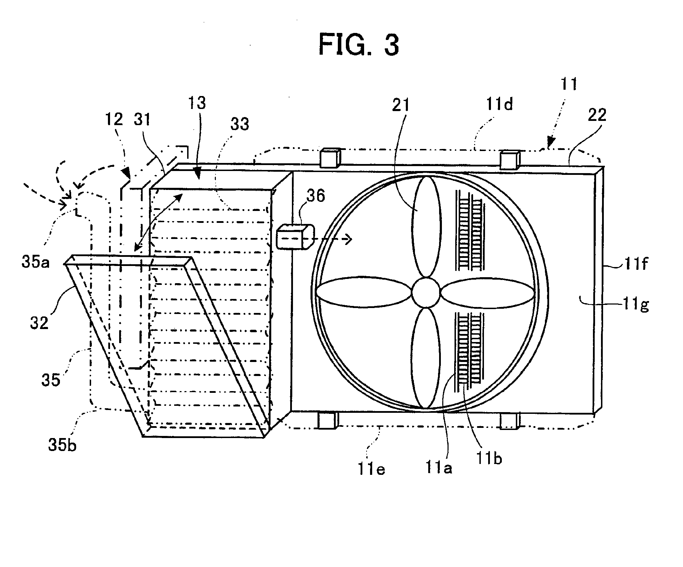

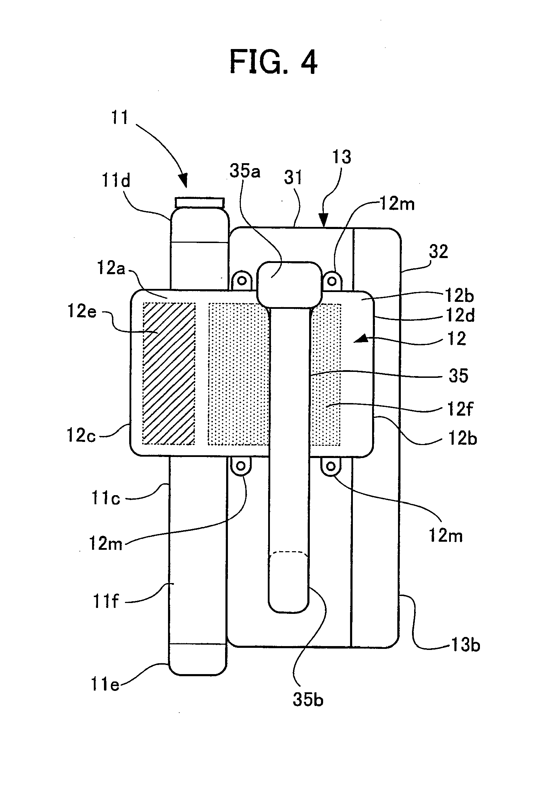

FIG. 1 is a plan view of essential portions forming part of the vehicular cooling apparatus according to one embodiment of the present invention, FIG. 2 is a rear view of the essential portions forming part of the cooling apparatus according to one embodiment of the present invention, FIG. 3 is a perspective view seen from the rear side of the essential portions forming part of the cooling apparatus according to one embodiment of the present invention, and FIG. 4 is a side elevation view showing another fastening means for fastening a vehicle accessory to an air cleaning device together with an air cleaner, a radiator, and an inlet duct forming part of the vehicular cooling apparatus according to the present invention.

The plan view in FIG. 1 schematically and fragmentally shows an automotive vehicle 1 having a cruising direction opposite to the directions shown by arrows Da. The words "rearwardly", "forwardly", "front" and "rear" are indicative of respective words used here with respect to the cruising direction of the vehicle, while the words "left" and "right" are also indicative of respective words used here when the vehicle is seen in FIG. 1. For better understanding, the legends "F", "R", "l", and "r" appearing with respective arrows in FIG. 1 are indicated to mean "forwardly", "rearwardly", "leftwardly", and "rightwardly", respectively.
The vehicular cooling apparatus according to the embodiment of the present invention is shown in FIGS. 1 to 3, and comprises a radiator 11 to be mounted forwardly of an engine on the front side of the vehicle 1, for example, on the rear side of a bumper body opening portion 1a of the vehicle 1, and an air cleaning device, e.g., an air cleaner 13 arranged at the left and rear side of the radiator 11. The particulars of the engine will be described hereinafter. The vehicular cooling apparatus further comprises an electronic control unit (hereinafter simply referred to as "ECU") 12 constituting a vehicle accessory for supporting the cruising operation of the vehicle 1 and mounted on the vehicle 1 by being arranged at the left side of the radiator 11 in FIGS. 1 and 2.

The radiator 11 is well known in the art and includes a plurality of liquid pipes 11a arranged in spaced and parallel relationship with each other to allow a cooling liquid, e.g., water to be circulated therethrough, an upper tank portion 11d and a lower tank portion 11e connected with the upper and lower end portions of the liquid pipes 11a, respectively, and a multiplicity of heat radiation fins 11b each intervening between the adjacent liquid pipes 11a. The liquid pipes 11a and the heat radiation fins 11b collectively constitute a radiator body 11f through which the air flow passes to radiate heat from the cooling liquid through the liquid pipes 11a and heat radiation fins 11b.
The upper tank portion 11d and the lower tank portion 11e of the radiator 11 are connected to a water jacket (not shown) of a multi-cylinder gasoline engine 2 transversely mounted on the vehicle 1 by respective heat and pressure resistant upper and lower horses not shown in the drawings. The gasoline engine 2, one of internal combustion engines is located behind the radiator 11 and generally becomes a heat source for emitting heat during the operation thereof. The gasoline engine 2, i.e., the internal combustion engine is representative of one typical example of an engine defined in the present invention. Other than the engine 2, the engine includes an electric motor and a hybrid type of engine equipped with an electric motor and an internal combustion engine according to the present invention.
The radiator 11, a water pump, and a thermostat not shown in the drawings constitute as a whole an engine cooling apparatus according to the present invention.

The engine cooling apparatus thus constructed is operable to allow the water pump to be operated in such a manner that the cooling liquid is supplied to the engine 2 from the lower tank portion 11e through the lower horse, while the cooling water is returned to the upper tank portion 11d from the engine 2 through the upper horse.
The liquid pipes 11a of the radiator 11 are arranged in parallel and spaced relationship with one another and vertically extend in the left and right directions of the vehicle 1 to form an air-ventilatable flat radiator body 11f together with the heat radiation fins each intervening between the adjacent liquid pipes 11a. The radiator body 11f of the radiator 11 thus constructed can allow the air flow to pass therethrough from the front end surface of the radiator body 11f, i.e., the front face 11c of the radiator 11 in the direction, shown by arrows Da in FIG. 1, perpendicular to the front face 11c of the radiator 11. In the vehicular cooling apparatus thus constructed, the cooling liquid cooling the engine 2 and heated by the engine 2 can be heat radiated through the liquid pipes 11a and the heat radiation fins 11b while the air flow passes through the radiator 11 in the direction shown by the arrows Da in FIG. 1 during the cruising operation of the vehicle 1 or at the time of the operation of an electric fan 21. The particulars of the electric fan 21 will become apparent as the description proceeds. The thermostat is disposed at the intake side of the water pump to serve as a flow rate adjusting valve for adjusting the flow rate of the cooling liquid passing through the radiator 11 by being closed and opened in response to the temperature of the cooling liquid.
It will therefore be understood that the radiator 11 serves as a heat radiation device for radiating heat from the cooling liquid in the vehicular cooling apparatus.

The ECU 12 is one of the vehicle accessories of the vehicle 1 and comprises an electronic control circuit board, and a circuit board case accommodating the circuit board therein and made of a metal having a high heat conductivity such as for example aluminum for facilitating the heat emitted from the ECU 12 to be radiated outside of the circuit board case. The circuit board is equipped thereon with a CPU (Central Processing Unit), a ROM (Read only Memory), a RAM (Random Access Memory), and an EEPROM (Electrically Erasable Programmable Read Only Memory) acting as a backup memory. The particulars of the CPU, the ROM, the RAM, and the EEPROM are not shown in the drawings. The circuit board further has mounted thereon an input interface circuit including an A/D converter and the like, an output interface circuit including a relay circuit, a driver circuit and the like, and a communication interface circuit capable of being in communication with the other ECUs mounted on the vehicle 1. The internal and external constructions of the ECU 12 are required to be designed in consideration of effectively heat radiating outside of the circuit board case. The particulars about the internal construction of the ECU 12 is not described herein but disclosed for example in Japanese Patent Application Laid-open Publication No. 2002-84054.

The ECU 12 has a function to control the operation of the engine 2 in compliance with a control program preliminarily stored in the ROM in accordance with the inputted information from various sensors and the inputted control information from the other ECUs mounted on the vehicle 1. The execution of the control program by the ECU 12 inevitably gives rise to heat from active elements (e.g., power transistors and power ICs) incorporated in the ECU 12.

In FIGS. 1 and 2, the ECU 12 has front and rear end portions 12a, 12b and front and rear end faces 12c, 12d in the fore and aft direction of the vehicle 1. The ECU 12 is arranged in the engine compartment and thus at all times subjected to the heat maintained at a high temperature due to the heat emitted from the engine under operation, thereby making it necessary for the ECU 12 to be heat radiated outside of the circuit board case and maintained cooled for efficiently operating the ECU 12 without deteriorating the performance of the ECU 12.
For this purpose, the ECU 12 is arranged at a position close to the radiator 11 and remote from the engine 2, viz., closer to the radiator 11 than the engine 2 to avoid the heat influence from the heat of the engine 2. Additionally, the ECU 12 is juxtaposed with the radiator 11, viz., in side-by-side relationship with the radiator 11 and in the vicinity of the outer peripheral portion of the radiator 11 with the front end portion 12a positioned forwardly of the radiator body 11f, and also with the front end face 12c positioned forwardly of the front end face 11c of the radiator 11. According to the present invention, the ECU 12 is required to be positioned with respect to the radiator 11 in such a manner that the front end portion 12a of the ECU 12 is positioned forwardly of the radiator body 11f in the fore and aft direction of the vehicle 1.
The ECU 12 has an intermediate plane IP separating the front and rear end portions 12a and 12b in the fore and aft direction of the vehicle 1. Here, the expression "the front end portion 12a of the ECU 12 is positioned forwardly of the radiator body 11f" includes two cases, viz., a first case in which the front end portion 12a of the ECU 12 projects forwardly from a front extension plane extending in alignment with the front end face 11c of the radiator 11, and a second case in which the front end portion 12a of the ECU 12 is positioned forwardly of a rear extension plane extending in alignment with the rear end face 11g of the radiator 11. In the second case, the intermediate plane IP of the ECU 12 is on the same plane as the rear extension plane extending in alignment with the rear end face 11g of the radiator 11 as will be seen from FIG. 1. According to the present invention, the ECU 12 may be arranged with respect to the radiator 11 with the intermediate plane IP of the ECU 12 positioned forwardly of the rear extension plane of the radiator 11.
The fact that the ECU 12 is arranged in positional relationship with the engine 2 and the radiator 11 in the engine compartment as constructed in the above leads to the fact that the ECU 12 can efficiently and sufficiently be cooled by the cool air flow from the front side of the vehicle 1 while avoiding the heat influence from the engine 2. In other words, the ECU 12 can be brought into contact with a sufficient amount of cool air flow introduced into the space around the ECU 12 while being subjected to the lessened heat influence of the engine 2.
It is thus to be noted that the above mentioned position of the ECU 12 with respect to the engine 2 and the radiator 11 in the engine compartment makes it possible to efficiently cool the ECU 12.

The air cleaner 13 is located to occupy a space at the rear side and the left side of the radiator 11 to separate the air flow passed through the radiator 11 from the air flow passing around the ECU 12. The air cleaner 13 located to occupy the space at the rear side and the left side of the radiator 11 enables the cool air separated from the air flow passed though the radiator 11 to be introduced into the space around the ECU 12 so that a sufficient amount of cool air separated from the air flow passed through the radiator 11 and introduced into the space around the ECU 12 is secured with certainty.

The air cleaner 13 comprises an air cleaner case 31 made of a light resin, an air cleaner cap 32 for opening and closing the cleaner case 31, an air element 33 stuffed into the air cleaner case 31 to function as a filter, and a HC absorption filter, e.g., a carbon filter (not shown) also stuffed into the air cleaner case 31, and an air flow meter (not shown).

On the rear side of the radiator 11 is provided a known electric fan 21 which is driven by an electric motor 21 a to produce the air flow from the front side of the vehicle 1 toward the rear side of the vehicle 1 through the radiator 11, viz., in the direction shown by the arrows Da in FIG. 1. The electric fan 21 is adapted to be controlled by the ECU 12 to maintain the temperature of the cooling water circulated in the liquid pipes 11a of the radiator 11 within a predetermined range.

Around the electric fan 21 is provided a fan shroud 22 to cover the rear side surface of the radiator 11, the fan shroud 22 being integrally formed with the air cleaner case 31. The air cleaner case 31 in the form of a rectangular shape is placed at the side of the electric fan 21, vertically extending with its traverse side longer than its upper side and in part rearwardly projecting from the fan shroud 22. The air cleaner case 31 is hinged at its lower end portion with the air cleaner cap 32 to enable the cleaner cap 32 to be opened and closed as shown in FIG. 3. FIG. 3 shows the air cleaner cap 32 maintained under the opened state.

As best shown in FIGS. 2 and 3, the air cleaner case 31 has a lower left end portion securely supporting an inlet duct 35 for having air introduced thereinto, and an upper right end portion attached with an air outlet pipe 36 (see FIG. 3).
The inlet duct 35 is roughly in the form of an L-shape and thus extends horizontally in a direction away from the air cleaner case 31 and extends vertically in parallel with the left wall surface of the air cleaner case 31 by way of a bent portion 35b to form a space between the air cleaner case 31 and the inlet duct 35. The inlet duct 35 has an air inlet opening 35a opened at its upper end and is positioned in the neighborhood of the upper portion of the air cleaner case 31 and the rear end portion of the ECU 12.
The ECU 12 is located in the space between the air cleaner case 31 and the inlet duct 35 above the bent portion 35b of the inlet duct 35, and thus is transversely spaced apart from the air cleaner case 31 and the inlet duct 35. The circuit board case of the ECU 12 is securely supported on the air cleaner case 31 by fastening means 12m as shown in FIGS. 1 and 2.
According to the present invention, the above fastening means 12m may be constructed as shown in FIG. 4. The fastening means 12m is shown in FIG. 4 to comprise a plurality of projections, for example, four projections protruding from the left sidewall of the air cleaner case 31 in spaced relationship with each other in the fore and aft direction of the vehicle 1 and each having a threaded hole to be screwed with a threaded bolt, a plurality of ear portions integrally formed with the circuit board case of the ECU 12, for example, four ear portions spaced from each other at the same distance as those of the projections in the fore and aft direction of the vehicle 1, each having a hole formed therein, and a plurality of bolts each passing through the hole of the ear portion to be threaded into the threaded hole of the projection. In this way, the ECU 12 is securely supported on the air cleaner case 31 while maintained transversely spaced apart from the left sidewall of the air cleaner case 31 and the right side of the inlet duct 35. The fastening means 12m mentioned above may be replaced by another fastening means which comprises a plurality of projections each having a threaded portion extending therefrom to be fixed by a nut with the ear portion of the circuit board case of the ECU 12 sandwiched between the upper face of the projection and the lower face of the nut.
The projections forming part of the fastening means 12m have appropriate heights, respectively, to retain the ECU 12 with an inner space between the ECU 12 and the left sidewall of the air cleaner case 31 and with an outer space between the ECU 12 and the inlet duct 35 to ensure that the air flow introduced from the front side of the vehicle 1 is sufficiently introduced into the inner and outer spaces at the both sides of the ECU 12, viz., around the ECU 12, thereby making it possible for the sufficient cool air flow to efficiently cool the ECU 12 in the most desired manner. It is preferable that the traverse width of the outer space be larger than that of the inner space so that the amount of air to pass through the outer space is increased as compared with the amount of air to pass through the inner space. This means that the increased amount of air passing through the outer space can sufficiently cool the heated active elements of the ECU 12 mounted on the circuit board in facing relationship with the inlet duct 35.
According to the present invention, the fastening means 12m may be replaced by any other type of fastening means if the fastening means can have the circuit board case of the ECU 12 securely supported on the air cleaner case 31 with the space between the air cleaner case 31 and the inlet duct 35 above the bent portion 35b of the inlet duct 35. As will be seen from FIGS. 2 and 4, the circuit board case of the ECU 12 may be arranged with respect to the air cleaner case 31 with its upper face lower than the upper face of the air cleaner case 31 according to the present invention.

The air inlet opening 35a of the inlet duct 35 is opened in the direction opposite to the radiator 11. In other words, the air inlet opening 35a of the inlet duct 35 is opened away from the left sidewall of the air cleaner case 31, viz., in the left direction of the vehicle 1 so that the air flow to be introduced into the inlet duct 35 can be directed toward the ECU 12.
It is thus to be noted that in view of the cool air around the ECU 12 to be introduced into the air inlet opening 35a of the inlet duct 35, the air inlet opening 35a of the inlet duct 35 is preferably opened away from the ECU 12 and the left sidewall of the air cleaner case 31, viz., in the left outward direction of the vehicle 1 so that the air flow around the ECU 12 can be directed toward the ECU 12 in most preferable manner.

The ECU 12 having a circuit board case made of aluminum and formed in a rectangular shape is disposed with the front end face 12c positioned forwardly of the front end face 11c of the radiator 11 and with the rear end face 12d positioned forwardly of the rear end face 13b of the air cleaner 13.
The ECU 12 has a high surface temperature portion 12e and a low surface temperature portion 12f positioned rearwardly of the high surface temperature portion 12e as shown in FIG. 4. In other words, the high surface temperature portion 12e is positioned forwardly of the low surface temperature portion 12f. The high surface temperature portion 12e is more readily heated than the low surface temperature portion 12f by the active elements such as transistors and the like among the constitution elements of the ECU 12 due to the active elements occupying the high surface temperature portion 12e. For this reason, the high surface temperature portion 12e is positioned forwardly of the low surface temperature portion 12f, thereby enabling the cool air flow from the front side of the vehicle 1 to be first directed toward the high surface temperature portion 12e and then directed toward the low surface temperature portion 12f. In other words, the high surface temperature portion 12e can be brought into earlier contact with the air flow than the low temperature portion 12f, thereby leading to the efficient cooling effect of the ECU 12.
The high surface temperature portion 12e is shown in FIG. 4 as being small in space as compared with the low surface temperature portion 12f, however, the high surface temperature portion 12e may inversely be large in space as compared with the low surface temperature portion 12f according to the present invention. The high surface temperature portion 12e and the low surface temperature portion 12f may be designed to be identical with the front end portion 12a and the rear end portion 12b, respectively, of the ECU 12 according to the present invention.
The circuit board of the ECU 12 has one traverse side opposite to and away from the radiator 11 and having the active elements such as transistors and the like mounted thereon to project therefrom and thus readily heated when the ECU 12 is being operated. The circuit board of the ECU 12 is therefore required to be cooled by the more amount of the air flow passing along the one transverse side than the amount of the air flow passing along the other transverse side of the circuit board of the ECU 12. For this purpose, the ECU 12 is arranged in spaced and facing relationship with the inlet duct 35 and the air cleaner case 31 with the inner space and the outer space, the latter outer space being wider in the traverse direction than the former inner space as explained above. This makes it possible to increase the amount of air flow in the outer space passing along the one transverse side with respect to the amount of air flow in the inner space passing along the other transverse side of the circuit board of the ECU 12 to bring about an efficient cooling effect to the active elements mounted on the one side of the circuit board of the ECU 12.
The air outlet pipe 36 of the air cleaner 13 is shown in FIG. 3 as projecting rightwardly from the air cleaner case 31 to be connected with the intake manifold (not shown) of the engine 2.

From the previously mentioned explanation, it will be understood that the ECU 12 arranged with respect to the radiator 11 with the front end portion 12a positioned forwardly of the radiator body 11f, and also with the front end face 12c positioned forwardly of the front end face 11c of the radiator 11 makes it possible for a sufficient amount of the cool air flow around the ECU 12 to be secured and thus efficiently cool the ECU 12 with the cool air flow introduced from the front side of the vehicle 1 as the air cleaner 13 is operated to introduce the air thereinto and can separate the air flow passed through the radiator 11 from the air flow around the ECU 12.

The operation of the vehicular cooling apparatus according to the embodiment of the present invention will be described hereinafter.

In the vehicular cooling apparatus constructed as previously mentioned, the ECU 12 is juxtaposed with the radiator 11 at a position closer to the radiator 11 than the engine 2 so that the ECU 12 can be efficiently cooled with the cool air introduced to the space around the ECU 12 from the front side of the vehicle 1 when the vehicle 1 is under the cruising operation. The ECU 12 is arranged with respect to the radiator 11 with the front end portion 12a positioned forwardly of the radiator body 11f to allow the sufficient cool air to pass around the ECU 12, thereby making it possible for the ECU 12 to be efficiently cooled with the cool air introduced to the space around the ECU 12 from the front side of the vehicle 1. This means that the ECU 12 and the members supporting the ECU 12 can be prevented not only from being held in contact with the air heated to a high temperature after passed through the radiator 11, viz., discharged from the radiator 11 but also from being affected with the heat of the engine 2. Further, it is neither required to accommodate the ECU 12 in the air-cooling case nor required to provide pipes or ducts exclusively used for the vehicle accessory. In the conventional vehicular cooling apparatus, the maintenance operation is performed by firstly removing the ECU 12 from the air-cooling case and then accommodating the ECU 12 in the air-cooling case. In contrast, the vehicular cooling apparatus according to the present invention can avoid such a laborious maintenance operation as the removing and accommodating operations required for the conventional vehicular cooling apparatus since the ECU 12 is not housed in the air-cooling case.
It will therefore be understood that the vehicular cooling apparatus according to the present invention is excellent both in the cooling efficiency of the ECU 12 and in the maintenance workability of the ECU 12.
The high temperature air flow passed through the radiator 11 is separated from the air flow around the ECU 12 during the cruising operation of the vehicle 1 by the air cleaner 13 positioned in the vicinity of the rear end portion of the ECU 12 and in the neighborhood of the left rear side of the radiator 11 in the present embodiment of the vehicular cooling apparatus. Therefore, the separation of the air flow around the ECU 12 from the air flow to pass through the radiator 11 renders it possible for an extremely sufficient amount of cool air flow passing around the ECU 12 to be secured to cool the ECU 12. Additionally, the ECU 12 and the members supporting the ECU 12 can be prevented from being exposed with the air heated to a high temperature after having passed through the radiator 11 but also can avoid from the heat of the engine 2.

The ECU 12 is positioned forwardly of the air cleaner 13 in fore and aft direction of the vehicle 1 so that the ECU 12 can be cooled by the cool air to be introduced into the air cleaner 13, thereby making it possible to enhance the cooling effect of the ECU 12.

The fact that the front end face 12c of the ECU 12 is positioned forwardly of the front end face 11c of the radiator 11 in the fore and aft direction of the vehicle 1 makes it possible for the ECU 12 to be sufficiently cooled by the cool air from the front side of the vehicle 1.

The high surface temperature portion 12e of the ECU 12 is positioned in the front side of the vehicle 1, viz., forwardly of the radiator body 11f of the radiator 11 and the low surface temperature portion 12f of the ECU 12 so that the cool air can initially be brought into contact with the high surface temperature portion 12e of the ECU 12, thereby making it possible to enhance the cooling effect of the ECU 12.

In the present embodiment of the vehicular cooling apparatus, the air inlet opening 35a of the inlet duct 35 is positioned in the neighborhood of the rear end portion of the ECU 12 so that the air flow around the ECU 12 can be directed toward the rear side of the vehicle 1, viz., in the direction shown by the arrows Da in FIG. 1 and the amount of air flow can reliably be increased as the air is introduced into the air cleaner 13. Accordingly, the cooling effect of the ECU 12 can be enhanced to a desired higher level.

The air inlet opening 35a of the inlet duct 35 is opened in the direction opposite to the radiator 11 with respect to the ECU 12, viz., away from the left sidewall of the air cleaner case 31 to ensure that the air flow is formed toward and along the left side of the ECU 12. Accordingly, the cooling effect of the ECU 12 can be enhanced to a desired higher level.

The fact that the ECU 12 is located between the air cleaner case 31 of the air cleaner 13 and the inlet duct 35 above the bent portion 35b of the inlet duct 35, and is supported on the air cleaner case 31 leads to the fact that the space around the air cleaner 13 can efficiently be used and the ECU 12 can efficiently be cooled by ambient air around the air flow to be introduced into the air cleaner 13, thereby making it possible to enhance the reliability of the ECU 12 without deteriorating the performance of the ECU 12.

The rectangular air cleaner case 31 of the air cleaner 13 located at the side of the electric fan 21 to vertically extend with the traverse side longer than the upper side makes it possible to allow an ample space to be secured for arranging the engine 2 within the narrow engine compartment.

The air cleaner case 31 hinged at its lower end portion with the air cleaner cap 32 to enable the cleaner cap 32 to be opened and closed can facilitate the maintenance operation of the air cleaner 13 as well as can secure a sufficient working space for the maintenance operation of the ECU 12, thereby making it possible to enhance the maintenance workability of the ECU 12.

In addition, the fan shroud 22 integrally formed with the air cleaner case 31 leads not only to reducing the number of parts and elements constituting the cooling apparatus but also to extensively simplifying structures for supporting the air cleaner 13, thereby making it possible to provide a compact vehicular cooling apparatus with a high degree of freedom for the layout of the vehicular cooling apparatus.

From the foregoing description, it will be understood that the present embodiment of the vehicular cooling apparatus is constructed to allow the air cleaner 13 to separate the high temperature air flow after passed through the radiator 11 from the air flow passing around the ECU 12 and to permit the air cleaner 13 to introduce the air around the ECU 12 thereinto, while securing the sufficient amount of cool air flow passing around the ECU 12 to cool the ECU 12 so that it is neither required to accommodate the ECU 12 in the air-cooling case needed for the conventional vehicular cooling apparatus nor required to provide pipes or ducts exclusively used for the vehicle accessory. As a consequence, the vehicular cooling apparatus above mentioned is excellent in the cooling efficiency of the ECU 12 as the vehicle accessory and excellent in the maintenance workability of the ECU 12 as the vehicle accessory.

Although there has been described about the ECU raised as one typical example of the vehicle accessory for controlling the engine, the ECU may control any other controllable objects except for the engine, or otherwise may be replaced by another ECU for controlling means other than the engine. The vehicle accessories may, of course, include batteries and other vehicle accessories susceptible to the heat from the engine. As one of the engines to be mounted on the automotive vehicle, the engine 2, one typical example of the internal combustion engine has been raised and explained, however, any one of other engines such as for example an electric motor, and a hybrid type of engine equipped with an electric motor and an internal combustion engine may be used in lieu of the engine 2.
In the previously mentioned embodiment, there has been explained about the engine 2 raised as one example of a multi-cylinder gasoline engine 2 transversely installed, however, the engine 2 may be replaced by other engine longitudinally installed. The fan 21 independently driven by an electric motor 21a to permit the radiator 11 to generate the air flow from the front side of the vehicle 1 toward the rear side of the vehicle 1 may be replaced by other fan which can be driven by the engine 2 or a different engine.
While there has been described about the radiator 11 constructed of a flat radiator body 11f with a plurality of liquid pipes 11a and heat radiation fins 11b each intervening between the adjacent liquid pipes 11a, the heat radiation device according to the present invention may include any other types of radiator body and any other heat radiation devices installed transversely and vertically of the vehicle.
The liquid pipes partly constituting the radiator body may be replaced by only one or a few long pipes meandered and swirled according to the present invention.

The vehicular cooling apparatus according to the present invention is not limited to the type raised for explanation in the above to radiate the heat with a water cooling type of heat radiation device for the internal combustion engine, but may be replaced by any other type of heat radiating the cooling water for cooling an electric motor in the case that the electric motor is used as an engine, or the electric motor is used together with an engine for a hybrid type of engine. Though the air cleaner case 31 has been explained as being located at the one side of the radiator 11 in the transverse direction of the vehicle 1, viz., at the side of the electric fan 21, vertically extending and rearwardly projecting from the fan shroud 22, the air cleaner case 31 is not limited to the type explained in the above but may of course include any configuration of air cleaner.

Similarly, the vehicular cooling apparatus according to the present invention is not limited to the type with the air inlet opening 35a of the inlet duct 35 opened away from the left sidewall of the air cleaner case 31, viz., in the left direction of the vehicle 1, the air inlet opening 35a of the inlet duct 35 may be opened in any other directions (for example, upwardly and downwardly, forwardly and rearwardly, rightwardly, and in an inclined direction with respect to the fore and aft direction and the transverse direction) in addition to the previously mentioned direction as long as the air inlet opening 35a of the inlet duct 35 functions to give rise to the air flow directed toward the ECU 12.
The air flow introduced perpendicularly to the radiator body 11f is not limited to the air flow directed in the rear side of the vehicle, but may be two differently directed air flows including a main air flow passed through the heat radiation device and an auxiliary air flow around the vehicle accessory, the main and auxiliary air flows being separated from each other by the air cleaner as previously mentioned.
Although the explanation has been made about the fan shroud 22 and the air cleaner case 31 integrally formed with each other, the fan shroud 22 and the air cleaner case 31 may be constructed by independent members detachably coupled with each other according to the present invention. Even if the fan shroud 22 and the air cleaner case 31 are integrally formed with each other, the inlet duct 35 may be an independent member detachably connected with the air cleaner case 31.

As will be understood from the foregoing description, the vehicular cooling apparatus according to the present invention can efficiently cool the vehicle accessory with cool air passing around the vehicle accessory without being subjected to the heat at high surface temperatures since the vehicle accessory is disposed at a position closer to the heat radiation device than the engine.
Further, the vehicular cooling apparatus according to the present invention is constructed to have a vehicle accessory having a front end portion and arranged with respect to the heat radiation device with the front end portion positioned forwardly of the radiator body so that the vehicle accessory can be cooled with the cool air flow from the front side of the vehicle. This results in the fact that it is neither required to accommodate the vehicle accessory in the air-cooling case nor required to provide pipes or ducts exclusively used for the vehicle accessory. The above advantageous effects can realize providing a vehicular cooling apparatus which is excellent both in the cooling efficiency and in the maintenance workability for the vehicle accessory with a high degree of freedom for the layout of the vehicular cooling apparatus, as well as which can be produced at a relatively low cost.
Still further, the vehicular cooling apparatus according to the present invention can separate the high temperature air flow passed through the radiator from the air flow around the vehicle accessory to secure a sufficient amount of cool air flow passing around the vehicle accessory to efficiently cool the vehicle accessory, thereby making it unnecessary to accommodate the vehicle accessory in the air-cooling case and to provide pipes or ducts exclusively used for the vehicle accessory.
The vehicular cooling apparatus according to the present invention is useful for cooling the vehicle accessory, being an electronic control unit, subjected to the heat at high surface temperatures.

## Claims

1. A vehicle comprising
an engine (2),
a vehicular cooling apparatus for cooling the engine (2), the vehicular cooling apparatus comprising a radiator (11) mounted on said vehicle (1) forwardly of said engine (2) and having at least one liquid pipe (11a) allowing a cooling liquid to be circulated therethrough to said engine (2) and arranged to form a radiator body (11f) through which an air flow from the front side of said vehicle (1) passes to radiate heat from said cooling liquid through said liquid pipe (11a) toward said engine, and
an electronic control unit (12) mounted on said vehicle (1), said electronic control unit (12) being arranged at a position closer to said radiator (11) than said engine (1) to be cooled by said air flow from the front side of said vehicle (1), **characterized in that**
said electronic control unit (12) is arranged in side-by-side relationship with said radiator body (11f) of said radiator (11) with respect to the front side of said vehicle, and
the vehicle cooling apparatus further comprises an air cleaner (13), said air cleaner (13) being disposed at a position between said engine(2) and said radiator (11) to separate said air flow passing around said electronic control unit (12) from said air flow passing through said radiator (11) toward the engine (2).

2. The vehicle as defined in claim 1, wherein said electronic control unit (12) has a front end portion (12a) and is arranged with respect to said radiator (11) with said front end portion (12a) positioned forwardly of said radiator body (11f) to be cooled by said air flow from the front side of said vehicle (1).

3. The vehicle as defined in claim 1 or claim 2, wherein said electronic control unit (12) has a front end face (12c) positioned forwardly of the front end face (11c) of said radiator body (11f) of said radiator (11).

4. The vehicle as defined in any one of claims 1 to 3, wherein said electronic control unit (12) has a high surface temperature portion (12e) and a low surface temperature portion (12f), said high surface temperature portion (12e) being positioned forwardly of said low surface temperature portion (12f).

5. The vehicle as defined in any one of claims 1 to 4, wherein said electronic control unit (12) is positioned forwardly of said air cleaner (13).

6. The vehicle as defined in any one of claims 1 to 5, wherein said air cleaner (13) has an air inlet duct (35) having an air inlet opening (35a) positioned in the vicinity of the rear end portion (12b) of said electronic control unit (12).

7. The vehicle as defined in claim 6, wherein said air cleaner (13) has an air inlet duct (35) having an air inlet opening (35a) opened in the direction opposite to said radiator (11).

8. The vehicle as defined in any one of claims 1 to 7, wherein said electronic control unit (12) is constituted by an electronic control unit (12) mounted on said vehicle (1), and said air cleaner (13) has an air cleaner case (31) for supporting said electronic control unit (12).

9. The vehicle as defined in any one of claims 1 to 8, which further comprises a fan (21) provided in the vicinity of said radiator (11) to produce said air flow passing through said radiator (11), and a fan shroud (22) covering the rear side of said radiator (11) around said fan (21), said air cleaner (13) having an air cleaner case (31) integrally formed with said fan shroud (22).

10. The vehicle as defined in claim 9, wherein said air cleaner case (31) of said air cleaner (13) is disposed at the side of said fan (21) to vertically extend.

11. The vehicle as defined in claim 9 or 10, wherein said air cleaner case (31) of said air cleaner (13) has a cap (32) capable of being opened and closed in the fore and aft direction of said vehicle (1).

## Patentansprüche

1. Fahrzeug, umfassend:
einen Motor (2),
eine Fahrzeugkühlvorrichtung zum Kühlen des Motors (2), wobei die Fahrzeugkühlvorrichtung einen Kühler (11) aufweist, der an dem Fahrzeug (1) vor dem Motor (2) montiert ist und mindestens ein Flüssigkeitsrohr (11a) aufweist, das es erlaubt, eine Kühlflüssigkeit hindurch zu dem Motor (2) zu zirkulieren, und das eingerichtet ist, um einen Kühlerkörper (11f) zu bilden, durch den ein Luftstrom von der Vorderseite des Fahrzeugs (1) hindurchgeht, um Wärme von der Kühlflüssigkeit durch das Flüssigkeitsrohr (11a) zu dem Motor abzustrahlen, und
eine elektronische Steuereinheit (12), die an dem Fahrzeug (1) montiert ist, wobei die elektronische Steuereinheit (12) an einer Position näher an dem Kühler (11) als der Motor (1), der durch den Luftstrom von der Vorderseite des Fahrzeugs (1) zu kühlen ist, angeordnet ist, **dadurch gekennzeichnet, dass**
die elektronische Steuereinheit (12) in einer Seite-an-Seite-Beziehung zu dem Kühlerkörper (11f) des Kühlers (11) in Bezug auf die Vorderseite des Fahrzeugs angeordnet ist, und
die Fahrzeugkühlvorrichtung ferner einen Luftreiniger (13) aufweist, wobei der Luftreiniger (13) an einer Position zwischen dem Motor (2) und dem Kühler (11) angeordnet ist, um den Luftstrom, der um die elektronische Steuereinheit (12) läuft, von dem Luftstrom, der durch den Kühler (11) zu der Kraftmaschine (2) läuft, zu trennen.

2. Fahrzeug nach Anspruch 1, wobei die elektronische Steuereinheit (12) einen Vorderendteil (12a) hat und in Bezug auf den Kühler (11) mit dem Vorderendteil (12a) vor dem Kühlerkörper (11f) positioniert eingerichtet ist, um von dem Luftstrom von der Vorderseite des Fahrzeugs (1) gekühlt zu werden.

3. Fahrzeug nach Anspruch 1 oder Anspruch 2, wobei die elektronische Steuereinheit (12) eine Vorderendseite (12c) hat, die vor der Vorderendseite (11 c) des Kühlerkörpers (11f) des Kühlers (11) positioniert ist.

4. Fahrzeug nach einem der Ansprüche 1 bis 3, wobei die elektronische Steuereinheit (12) einen Teil (12e) mit hoher Oberflächentemperatur und einen Teil (12f) mit niedriger Oberflächentemperatur hat, wobei der Teil (12e) mit hoher Oberflächentemperatur vor dem Teil (12f) mit niedriger Oberflächentemperatur positioniert ist.

5. Fahrzeug nach einem der Ansprüche 1 bis 4, wobei die elektronische Steuereinheit (12) vor dem Luftreiniger (13) positioniert ist.

6. Fahrzeug nach einem der Ansprüche 1 bis 5, wobei der Luftreiniger (13) eine Lufteinlassleitung (35) hat, die eine Lufteinlassöffnung (35a) hat, die in der Nähe des hinteren Endteils (12b) der elektronischen Steuereinheit (12) positioniert ist.

7. Fahrzeug nach Anspruch 6, wobei der Luftreiniger (13) eine Lufteinlassleitung (35) hat, die eine Lufteinlassöffnung (35a) hat, die in die Richtung geöffnet ist, die dem Kühler (11) gegenüber liegt.

8. Fahrzeug nach einem der Ansprüche 1 bis 7, wobei die elektronische Steuereinheit (12) aus einer elektronischen Steuereinheit (12) besteht, die an dem Fahrzeug (1) montiert ist, und wobei der Luftreiniger (13) ein Luftreinigergehäuse (31) zum Tragen der elektronischen Steuereinheit (12) aufweist.

9. Fahrzeug nach einem der Ansprüche 1 bis 8, das ferner einen Ventilator (21), der in der Nähe des Kühlers (11) vorgesehen ist, um einen Luftstrom zu erzeugen, der durch den Kühler (11) läuft, und eine Ventilatorverkleidung (22) aufweist, die die Rückseite des Kühlers (11) um den Ventilator (21) abdeckt, wobei der Luftreiniger (13) ein Luftreinigergehäuse (31) besitzt, das integral mit der Ventilatorverkleidung ausgebildet ist.

10. Fahrzeug nach Anspruch 9, wobei das Luftreinigergehäuse (31) des Luftreinigers (13) an der Seite des Ventilators (21) angeordnet ist, um sich vertikal zu erstrecken.

11. Fahrzeug nach Anspruch 9 oder 10, wobei das Luftreinigergehäuse (31) des Luftreinigers (13) eine Haube (32) besitzt, die in die Richtung nach vorn und hinten des Fahrzeugs (1) geöffnet und geschlossen werden kann.

## Revendications

1. Véhicule comportant
un moteur (2),
un appareil de refroidissement de véhicule destiné à refroidir le moteur (2), l'appareil de refroidissement de véhicule comportant un radiateur (11) monté sur ledit véhicule (1) à l'avant dudit moteur (2) et ayant au moins un tuyau de liquide (11a) permettant à un liquide de refroidissement d'être distribué par son intermédiaire audit moteur (2) et prévu pour former un corps de radiateur (11f) à travers lequel un écoulement d'air depuis le côté avant dudit véhicule (1) passe afin de diffuser la chaleur dudit liquide de refroidissement à travers ledit tuyau de liquide (11a) vers ledit moteur, et
une unité de commande électronique (12) montée sur ledit véhicule (1), ladite unité de commande électronique (12) étant disposée dans une position plus près dudit radiateur (11) que dudit moteur (1) afin d'être refroidie par ledit écoulement d'air provenant du côté avant dudit véhicule (1), **caractérisé en ce que**
ladite unité de commande électronique (12) est disposée en relation côte à côte avec ledit corps de radiateur (11f) dudit radiateur (11) par rapport au côté avant dudit véhicule, et
l'appareil de refroidissement de véhicule comportant en outre un filtre à air (13), ledit filtre à air (13) étant disposé dans une position entre ledit moteur (2) et ledit radiateur (11) afin de séparer ledit écoulement d'air passant autour de ladite unité de commande électronique (12) dudit écoulement d'air passant à travers ledit radiateur (11) vers le moteur (2).

2. Véhicule selon la revendication 1, dans lequel ladite unité de commande électronique (12) a une partie d'extrémité avant (12a) et est disposée par rapport audit radiateur (11) avec ladite partie d'extrémité avant (12a) positionnée en avant dudit corps de radiateur (11f) afin d'être refroidie par ledit écoulement d'air provenant du côté avant dudit véhicule (1).

3. Véhicule selon la revendication 1 ou la revendication 2, dans lequel ladite unité de commande électronique (12) a une face d'extrémité avant (12c) positionnée en avant de la face d'extrémité avant (11c) dudit corps de radiateur (11f) dudit radiateur (11).

4. Véhicule selon l'une quelconque des revendications 1 à 3, dans lequel ladite unité de commande électronique (12) a une partie à température de surface élevée (12e) et une partie à température de surface basse (12f), ladite partie à température de surface élevée (12e) étant positionnée en avant de ladite partie à température de surface basse (12f).

5. Véhicule selon l'une quelconque des revendications 1 à 4, dans lequel ladite unité de commande électronique (12) est positionnée en avant dudit filtre à air (13).

6. Véhicule selon l'une quelconque des revendications 1 à 5, dans lequel ledit filtre à air (13) a un conduit d'entrée d'air (35) ayant une ouverture d'entrée d'air (35a) positionnée au voisinage de la partie d'extrémité arrière (12b) de ladite unité de commande électronique (12).

7. Véhicule selon la revendication 6, dans lequel ledit filtre à air (13) a un conduit d'entrée d'air (35) ayant une ouverture d'entrée d'air (35a) ouverte dans la direction opposée audit radiateur (11).

8. Véhicule selon l'une quelconque des revendications 1 à 7, dans lequel ladite unité de commande électronique (12) est constituée par une unité de commande électronique (12) montée sur ledit véhicule (1), et ledit filtre à air (13) a un boîtier de filtre à air (31) destiné à supporter ladite unité de commande électronique (12).

9. Véhicule selon l'une quelconque des revendications 1 à 8, qui comporte en outre un ventilateur (21) prévu au voisinage dudit radiateur (11) afin de produire ledit écoulement d'air passant à travers ledit radiateur (11), et un carénage de ventilateur (22) recouvrant le côté arrière dudit radiateur (11) autour dudit ventilateur (21), ledit filtre à air (13) ayant un boîtier de filtre à air (31) formé d'un seul tenant avec ledit carénage de ventilateur (22).

10. Véhicule selon la revendication 9, dans lequel ledit boîtier de filtre à air (31) dudit filtre à air (13) est disposé sur le côté dudit ventilateur (21) afin de s'étendre verticalement.

11. Véhicule selon la revendication 9 ou 10, dans lequel ledit boîtier filtre à air (31) dudit filtre à air (13) a un couvercle (32) qui peut être ouvert et fermé dans la direction avant et arrière dudit véhicule (1).
